# FASCICULE DE BREVET EUROPEEN

(11) **EP 2 673 148 B1**
(45) Date de publication et mention de la délivrance du brevet: **25.05.2016**
(21) Numéro de dépôt: 12707886.3
(22) Date de dépôt: 08.02.2012
(51) Int. Cl.: B60C 23/20, B60W 40/06

(54) **DISPOSITIF DE MESURE DE TEMPÉRATURE DES PNEUS D'UN VÉHICULE**
VORRICHTUNG UND VERFAHREN ZUR TEMPERATURÜBERWACHUNG EINES KRAFTFAHRZEUGSREIFEN
DEVICE AND METHOD FOR MONITORING THE TEMPERATURE OF A VEHICLE TIRE

(30) Priorité: 09.02.2011 FR 1151009
(43) Date de publication de la demande: 18.12.2013
(73) Titulaire: Renault S.A.S., 92100 Boulogne-Billancourt (FR)
(72) Inventeur: CHABANON, Christian, F-78180 Montigny-le-Bretonneux (FR)
(86) Numéro de dépôt international: PCT/FR2012/050271
(87) Numéro de publication internationale: WO 2012/107690

(56) Documents cités:
- EP-A1- 0 374 770
- EP-A2- 1 510 427
- DE-A1-102010 027 647

## Description

L'invention concerne les systèmes d'aide à la conduite de véhicules et, plus précisément, un dispositif de détection d'eau ou de verglas sur la bande de roulement des pneumatiques, en absence d'intempérie, qui traduit la présence d'une très faible hauteur d'eau sur la chaussée, ainsi qu'un dispositif d'alerte de cette détection pour le conducteur d'un véhicule automobile.

En effet, après la pluie, et lorsque le brouillard d'eau projeté à l'arrière par les voitures en circulation est fortement diminué, voire a disparu, ou lorsque le conducteur est relativement seul sur la route, les automobilistes retrouvent plus de visibilité et réacquièrent de la confiance. La confiance acquise, les automobilistes ont tendance à augmenter la vitesse de leur véhicule.

Des récentes études ont mis en évidence que 20% des accidents se produisent après la pluie, lorsque la route est encore humide et la chaussée n'est pas encore totalement sèche.

Ainsi le conducteur, confiant par la visibilité retrouvée, augmente sa vitesse, sa prise de risques dans les virages et sa confiance dans l'exécution de manoeuvres brutales, n'ayant pas conscience que l'adhérence du pneu sur la chaussée est encore loin de sa valeur nominale. En effet sur certaines chaussées et en présence d'une hauteur d'eau très faible (de l'ordre d'un dixième de millimètre par exemple), le pneumatique est suffisamment humide et n'a pas l'adhérence nécessaire pour permettre au conducteur de faire face, sans conséquence, à ses prises de risques.

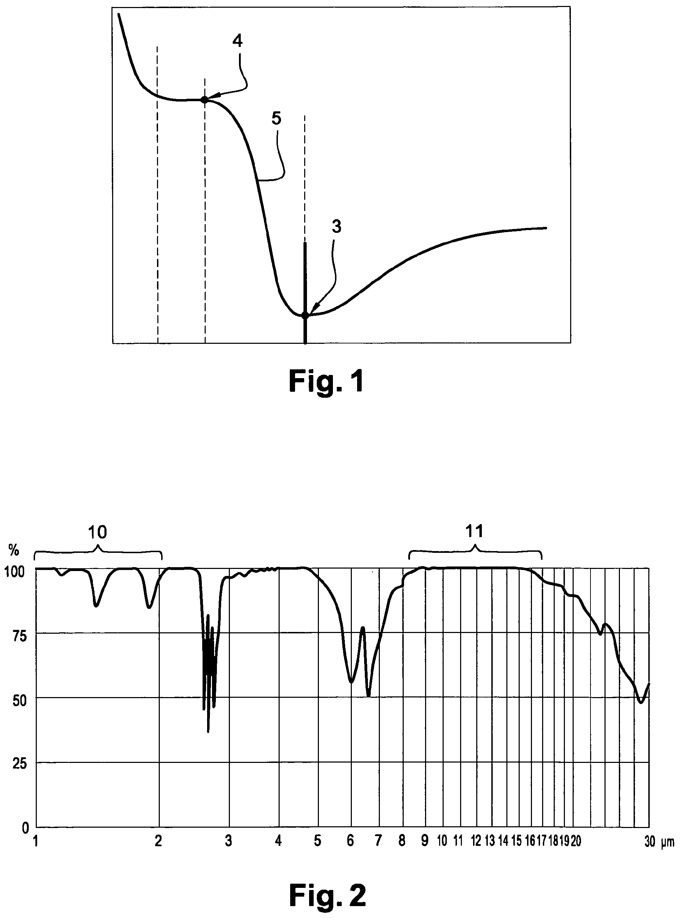

En figure 1, la courbe 5 représente l'évolution de l'adhérence en ordonnée en fonction du glissement de la roue, en abscisse.

En parcourant cette courbe, depuis l'état d'une route mouillée correspondant à des valeurs élevés de glissement, vers l'origine ce qui correspond à une route sèche, on trouve, d'abord, le point 3 qui représente la valeur critique où s'arrêtent la production et la projection du brouillard d'eau à l'arrière des véhicules en circulation.

Ensuite on trouve le point 4 qui indique une limite acceptable où l'adhérence des pneumatiques du véhicule n'est plus dangereusement affectée par l'humidité. Dans cet intervalle, la variation du coefficient de friction qui représente l'adhérence, est très importante pour des petites variations du glissement de la roue. C'est dans cet intervalle qui correspond à des très faibles hauteurs d'eau, que se situe l'objet de l'invention.

Il est donc nécessaire de pouvoir détecter la présence des très faibles hauteurs d'eau entre le pneu et la chaussée et de pouvoir prévenir le conducteur de la persistance de la faible adhérence des pneumatiques de son véhicule sur la chaussée encore humide.

On connaît un système, tel celui décrit dans le brevet JP5229461, qui propose de détecter l'hydroplanage d'un véhicule sur une route inondée mais il ne traite pas de la détection de très faibles quantités d'eau.

Il est également connu par le brevet FR2819590, en accord avec les préambules respectifs de revendications 1 et 7, un dispositif d'alerte de risque d'hydroplanage utilisant les répercussions de la projection d'eau dans le passage de roue d'un véhicule. Le dispositif décrit dans ce document ne traite pas non plus les très faibles quantités d'eau présentes sur les chaussées.

Un but de la présente invention est de pallier aux absences précitées, par la détection et communication au conducteur, de la présence d'eau sur la bande de roulement d'un pneu.

Dans ce but l'invention propose un dispositif de détection de présence d'humidité, d'eau ou de verglas sur la bande de roulement d'un pneumatique d'un véhicule automobile, ainsi que d'un dispositif d'alerte au conducteur de cette détection caractérisé en ce qu'il comporte au moins deux capteurs de température dont l'un, dit capteur sec, par sa disposition, et/ou sa nature, mesure une température T1 du pneumatique insensible à la présence d'eau, et l'autre, dit capteur humide, par sa disposition, et/ou sa nature, mesure une température T2 du pneumatique sensible à la présence d'eau, ledit dispositif comportant également un moyen de comparaison des deux températures relevées par les capteurs, ainsi qu' un moyen d'alerte pour prévenir le conducteur en cas de détection.

Pour l'expression «par sa disposition, mesure une température du pneumatique sensible à la présence d'eau » on entend un capteur disposé de sorte à mesurer la température de la bande de roulement dans sa partie en contact avec la chaussée.

Pour l'expression «par sa nature, mesure une température du pneumatique sensible à la présence d'eau » on entend un capteur fonctionnant à une longueur d'onde électromagnétique sensible à la présence d'eau.

Pour l'expression «par sa disposition, mesure une température du pneumatique insensible à la présence d'eau » on entend un capteur disposé de sorte à mesurer la température dans des zones du pneu encore, déjà ou toujours sèches, liées au fait de la très faible hauteur d'eau sur la chaussée.

En effet, en présence de très faibles hauteurs d'eau sur la chaussée, certaines parties du pneumatique restent sèches ou sèchent rapidement comme par exemple le flanc ou les sculptures d'un pneumatique.

Pour l'expression «par sa nature, mesure une température du pneumatique insensible à la présence d'eau » on entend un capteur fonctionnant à une longueur d'onde électromagnétique insensible à la présence d'eau.

L'invention s'appuie sur le principe d'émissivité entre la gomme sèche d'un pneu et celle d'un pneu recouvert d'un film d'eau qui s'évapore consommant l'énergie calorifique du pneu, ce qui a pour effet de faire baisser sa température.

Un premier avantage de l'invention est de pouvoir réaliser la détection en réalisant des mesures différentielles de température indifféremment entre :
- deux régions différentes du pneu
- deux éléments différents de ce même pneu
- deux points de la même région

De plus le processus de détection s'applique de la même manière sur des chaussées glacées parce que le mécanisme est identique en présence de glace sur la chaussée, il est même accentué par la double transformation de la glace en eau puis en vapeur, qui tend à diminuer davantage la température du pneumatique.

Donc, lorsque les températures mesurées sont proches de zéro ou en dessous de zéro, le dispositif détecte la présence de glace sur la bande de roulement du pneumatique.

Un autre avantage de l'invention est la sensibilisation du conducteur sur l'état d'adhérence de son véhicule grâce à la production et l'émission d'un signal lui signifiant la détection de la présence de très faibles hauteurs d'eau sur la chaussée jusqu' au tableau de bord.

L'invention sera mieux comprise à la lecture de la description détaillée illustrée par les figures suivantes sur lesquelles :
- la figure 1 est le graphique de Stribeck qui illustre le coefficient de frottement entre deux corps,
- la figure 2 représente l'évolution de la transmissivité en fonction de la longueur d'onde utilisée par le capteur choisi,
- les figures 3a et 3b représentent deux possibilités d'utilisation des capteurs,
- la figure 4 représente les étapes du procédé d'émission du signal d'alerte au conducteur.

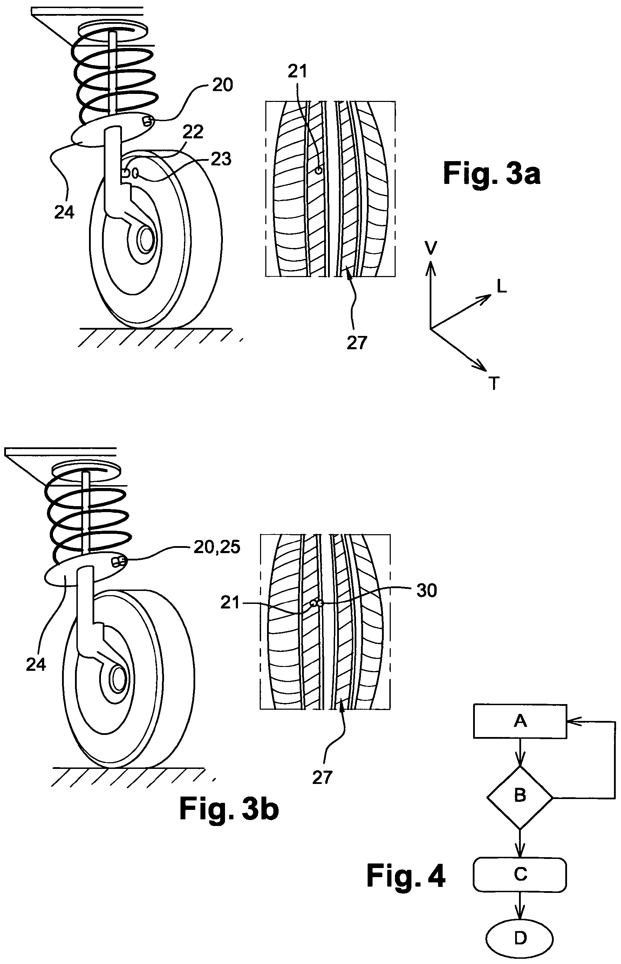

Dans la description qui va suivre et, notamment dans les figures 3a et 3b on a adopté, par commodité, une orientation longitudinale, verticale et transversale selon le trièdre LVT, représenté sur la figure.

L'invention se propose de réaliser une mesure différentielle de température entre deux éléments du pneu pour détecter la présence d'eau ou de glace sur la bande de roulement du pneumatique. Ces mesures sont réalisées à distance par des capteurs à infrarouges.

La figure 2 caractérise les types de capteurs électromagnétiques par rapport à la longueur d'onde électromagnétique utilisée.

Elle montre en particulier la variation en pourcentage de la transmissivité pour de l'eau en fonction de la longueur d'onde du capteur et met en évidence deux zones de longueurs d'ondes différentes qui représentent :
- l'intervalle 10 qui va de 1 à 2 micromètre qui est l'intervalle de travail des capteurs sensibles à l'humidité ou à la glace ;
- l'intervalle 11 qui va de 8 à 14 micromètre qui est l'intervalle de travail des capteurs insensibles à l'humidité ou à la glace.

Un capteur travaillant dans l'intervalle 11, traverse l'environnement sans affecter la mesure de température de surface de la bande de roulement du pneumatique c'est-à-dire qu'il mesure la température du pneumatique indépendamment de la présence d'eau.

Pour réaliser une mesure de température T1 du pneumatique en l'absence d'eau, on peut utiliser un capteur, dit capteur sec, travaillant dans l'intervalle 10, positionné face à une partie sèche du pneumatique ou un capteur qui travaille dans l'intervalle de 11, positionné face à une partie quelconque du pneumatique. Pour réaliser une mesure de température T2 de la bande de roulement, en présence d'eau, il est nécessaire d'utiliser un capteur, dit capteur humide, qui travaille dans l'intervalle 10, positionné au niveau de la bande de roulement 21.

Un des modes de mise en oeuvre, illustré en figure 3a, consiste à utiliser deux types de capteurs différents : un capteur travaillant dans l'intervalle 10 donc, sensible à l'humidité ou la glace, pour la mesure de la température T2, et un autre dans l'intervalle 11, pour obtenir la mesure de la température T1. On utilise pour cela deux capteurs à infrarouges 20 et 22 situés sous la coupelle 24 du ressort de l'amortisseur du véhicule, le capteur 20 étant disposé face à la bande de roulement pour mesurer à distance la température T2 de la bande de roulement, le capteur 22, étant disposé face au flanc 23 du pneumatique 27 pour mesurer la température T1.

Le positionnement des capteurs sous la coupelle présente l'avantage d'une protection de ces capteurs par ladite coupelle. De plus cet espace est libre, ce qui évite des problèmes d'encombrement des capteurs, tout en restant difficilement accessible de l'extérieur du véhicule. Enfin, la coupelle offre avantageusement un moyen de maintien du capteur.

Un second mode de mise en oeuvre est illustré en figure 3b où le capteur à infrarouge 20 est toujours situé sous la coupelle 24 du ressort de l'amortisseur du véhicule et mesure la température T2 de la bande de roulement 21. En revanche un capteur 25 à infrarouges, qui travaille dans l'intervalle 11, est situé au droit de la bande de roulement 21 du pneumatique 27 et mesure la température à l'intérieur d'une sculpture 30 de la bande de roulement 21 du pneumatique 27.

L'avantage de cette solution est la conception d'un capteur plus compact disposé au droit de la bande de roulement 21 du pneumatique 27.

La mesure relative de la température sur le même pneumatique permet de s'affranchir du problème du coefficient d'émissivité identique pour les deux mesures.

Si le différentiel de température se révèle supérieur à une valeur de seuil S=5°C, on aura détecté la présence d'une très faible hauteur d'eau ou de glace sur la chaussée. Pour ces deux modes de mise en oeuvre, le seuil de 5°C est un compromis limitant les fausses détections. Ce seuil pourrait être différent en fonction de la précision des capteurs et de la robustesse de l'algorithme de traitement des données.

La mesure de températures proches de zéro ou en dessous de zéro permet de signaler la présence de glace sur la chaussée.

Lorsque le seuil S est franchi, un signal sonore ou lumineux est envoyé au conducteur.

En figure 4 il est décrit l'enchainement des étapes du procédé :
- A l'étape A, on mesure les températures T1 et T2 de deux zones du pneumatique 27, tel que précédemment expliqué,
- A l'étape B, on compare en continu ces deux valeurs de température et on calcule le différentiel,
- A l'étape C, lorsque le différentiel de température est supérieur à la valeur seuil S, il y a détection de la présence d'eau sur la bande de roulement,
- A l'étape D, l'information de détection de présence d'humidité ou de glace est renvoyée au tableau de bord du conducteur constituant ainsi un signal d'alerte émis à destination du conducteur.

La connaissance de la présence d'eau ou de glace sur la bande de roulement permet au conducteur de limiter sa survitesse et de l'adapter aux conditions d'adhérence de la chaussée.

Il est aussi envisageable d'envoyer le signal d'alerte de détection à des systèmes de sécurité actifs, comme l'antiblocage des roues, le correcteur d'assiette, le régulateur de vitesse, l'assistance de direction, qui passent alors d'un état de veille à un état actif tant que la détection de présence d'eau a lieu.

L'invention n'est pas limitée aux modes de réalisation décrits ci-dessus.

Des systèmes alternatifs peuvent utiliser des capteurs, intégrés au pneumatique 27. Il est également envisageable qu'un même capteur physique intègre une mesure de température ambiante T'1. Ceci permet donc d'utiliser cette valeur de température pour le calcul du différentiel de température recherché et donc pour la détection d'eau sur la bande après un étalonnage adéquat.

Il est également envisageable d'utiliser deux capteurs visant la bande de roulement en contact avec la chaussée, l'un des capteurs étant insensible à l'humidité et mesurant T1 et l'autre étant sensible et mesurant T2.

Par ailleurs le dispositif de détection et /ou d'alerte peut être corrélé avec le fonctionnement des essuie glace, et notamment le mode de fonctionnement intermittent qui traduit le mieux les conditions où l'on observe la présence de très faibles hauteurs d'eau sur la chaussée.

Le dispositif de détection selon l'invention s'applique à tout type de véhicule automobile équipé de pneumatiques.

Ce dispositif et le procédé associé permettent de réduire avantageusement les risques d'accidents liés à l'humidité des chaussées, humidité ou présence d'eau qui peut être la conséquence non seulement d'intempéries, pluies, orages, neige, mais également à tout type de circonstance entraînant la présence d'eau sur la chaussée.

## Revendications

1. Dispositif de détection de présence d'humidité, d'eau ou de verglas sur la bande de roulement (21) d'un pneumatique (27) d'un véhicule automobile, ainsi que d'un dispositif d'alerte au conducteur de cette détection **caractérisé en ce qu'**il comporte au moins deux capteurs de température (20, 22) dont l'un, dit capteur sec (22), par sa disposition, et/ou sa nature, mesure une température T1 du pneumatique insensible à la présence d'eau, et l'autre, dit capteur humide (20), par sa disposition, et/ou sa nature, mesure une température T2 du pneumatique sensible à la présence d'eau, ledit dispositif comportant également un moyen de comparaison des deux températures relevées par les capteurs, ainsi qu' un moyen d'alerte pour prévenir le conducteur en cas de détection.

2. Dispositif de détection selon la revendication 1, **caractérisé en ce que** la température T1 est mesurée sur le flanc du pneumatique par un capteur à infrarouge (22) disposé à distance dudit flanc (23),

3. Dispositif de détection selon la revendication précédente, **caractérisé en ce que** le capteur (22) est situé sous la coupelle (24) du ressort de l'amortisseur.

4. Dispositif de détection selon la revendication de 1, **caractérisé en ce que** la température T1 est mesurée à l'intérieur d'une sculpture (30) de la bande de roulement (21) du pneumatique (27) par un capteur (25) à infrarouges, au droit de la bande de roulement (21) du pneumatique (27).

5. Dispositif de détection selon l'une quelconque des revendications précédentes, **caractérisé en ce que** la température T2 de la bande de roulement est mesurée par un capteur (20) à infrarouge disposé face à ladite bande de roulement (21) du pneumatique (27) et situé sous la coupelle (24) du ressort de l'amortisseur.

6. Dispositif de détection selon la revendication 5, **caractérisé en ce que** le capteur (20) qui mesure la température T2 travaille dans un intervalle de longueur d'onde entre 1 et 2 micromètres ;

7. Procédé de détection de présence d'humidité, d'eau ou de verglas sur la bande de roulement (21) d'un pneumatique (27) d'un véhicule automobile et d'alerte au conducteur utilisant un dispositif selon l'une quelconque des revendications précédentes, **caractérisé en ce que** la détection d'eau sur la bande de roulement (21) du pneumatique (27) est réalisée lorsque la différence de température entre T1 et T2, est supérieure à un seuil S=5°C.

8. Procédé de détection selon la revendication 6, **caractérisé en ce que** la détection de glace sur la bande de roulement (21) du pneumatique (27) est réalisée lorsque les températures mesurées T1 et T2 sont proches de zéro ou en dessous de zéro.

9. Procédé de détection selon l'une des revendications 6 ou 7 **caractérisé en ce que** l'information de détection de présence d'humidité ou de glace est renvoyée au tableau de bord du conducteur.

10. Procédé de détection selon l'une quelconque des revendications de 6 à 8 **caractérisé en ce que** le signal d'alerte généré est envoyé aux systèmes de sécurité active présents sur le véhicule comme l'antiblocage des roues, le système correcteur d'assiette, le système de direction assistée, ou le régulateur de vitesse et ceci tant que la détection de présence d'eau a lieu.

11. Procédé de détection selon l'une quelconque des revendications de 6 à 9, **caractérisé en ce que** les étapes du procédé sont réalisées en continu.

## Patentansprüche

1. Vorrichtung zur Detektion des Vorhandenseins von Feuchtigkeit, Wasser oder Eis auf der Lauffläche (21) eines Luftreifens (27) eines Kraftfahrzeuges, sowie auch eine Vorrichtung zum Melden dieser Detektion an den Fahrer, **dadurch gekennzeichnet, dass** sie mindestens zwei Temperatursensoren (20, 22) umfasst, von denen einer, der unempfindlich für das Vorhandensein von Wasser ist, Trockensensor (22) genannt, durch seine Anordnung und/oder seine Art eine Temperatur T1 des Luftreifens misst, und der andere, der für das Vorhandensein von Wasser empfindlich ist, Feuchtigkeitssensor (20) genannt, durch seine Anordnung und/oder seine Art eine Temperatur T2 des Luftreifens misst, wobei die genannte Vorrichtung ebenfalls ein Mittel zum Vergleichen der beiden Temperaturen, die von den Sensoren erfasst werden, sowie auch ein Warnmittel umfasst, um den Fahrer bei einer Detektion zu warnen.

2. Detektionsvorrichtung nach Anspruch 1, **dadurch gekennzeichnet, dass** die Temperatur T1 an der Flanke des Luftreifens durch einen Infrarotsensor (22) gemessen wird, der von der genannten Flanke (23) beabstandet angeordnet ist.

3. Detektionsvorrichtung nach vorhergehenden Anspruch, **dadurch gekennzeichnet, dass** sich der Sensor (22) unter dem Teller (24) der Feder des Stoßdämpfers befindet.

4. Detektionsvorrichtung nach Anspruch 1, **dadurch gekennzeichnet, dass** die Temperatur T1 im Innern eines Profils (30) der Lauffläche (21) des Luftreifens (27) durch einen Infrarotsensor (25) direkt über der Lauffläche (21) des Luftreifens (27) gemessen wird.

5. Detektionsvorrichtung nach irgendeinem der vorhergehenden Ansprüche, **dadurch gekennzeichnet, dass** die Temperatur T2 der Lauffläche durch einen Infrarotsensor (20) gemessen wird, der gegenüber der genannten Lauffläche (21) des Luftreifens (27) angeordnet ist und sich unter dem Teller (24) der Feder des Stoßdämpfers befindet.

6. Detektionsvorrichtung nach Anspruch 5, **dadurch gekennzeichnet, dass** der Sensor (20), der die Temperatur T2 misst, in einem Intervall einer Wellenlänge zwischen 1 und 2 Mikrometer funktioniert.

7. Verfahren zur Detektion des Vorhandenseins von Feuchtigkeit, Wasser oder Eis auf der Lauffläche (21) eines Luftreifens (27) eines Kraftfahrzeuges und zur Warnung des Fahrers, der eine Vorrichtung nach irgendeinem der vorhergehenden Ansprüche verwendet, **dadurch gekennzeichnet, dass** die Detektion von Wasser auf der Lauffläche (21) des Luftreifens (27) erfolgt, wenn der Temperaturunterschied zwischen T1 und T2 über einem Schwellenwert S = 5 °C liegt.

8. Detektionsverfahren nach Anspruch 6, **dadurch gekennzeichnet, dass** die Detektion von Eis auf der Lauffläche (21) des Luftreifens (27) erfolgt, wenn die gemessenen Temperaturen T1 und T2 in der Nähe von Null oder unter Null liegen.

9. Detektionsverfahren nach einem der Ansprüche 6 oder 7, **dadurch gekennzeichnet, dass** die Informationen über die Detektion des Vorhandenseins von Feuchtigkeit oder Eis an das Instrumentenbrett des Fahrers zurückgesendet werden.

10. Detektionsverfahren nach irgendeinem der Ansprüche 6 bis 8, **dadurch gekennzeichnet, dass** das erzeugte Warnsignal an die aktiven Sicherheitssysteme gesendet wird, wie beispielsweise das Antiblockiersystem der Räder, das Niveauregulierungssystem, das Servolenkungssystem oder die Geschwindigkeitsregulierung, die an dem Fahrzeug vorhanden sind, und dies solange wie das Vorhandensein von Wasser detektiert wird.

11. Detektionsverfahren nach irgendeinem der Ansprüche 6 bis 9, **dadurch gekennzeichnet, dass** die Schritte des Verfahrens kontinuierlich durchgeführt werden.

## Claims

1. Device for detecting the presence of moisture, of water or of black ice on the tread (21) of a tyre (27) of a motor vehicle, and a device for warning the driver of this detection, **characterized in that** it comprises at least two temperature sensors (20, 22), of which one, called dry sensor (22), by its arrangement and/or its nature, measures the temperature T1 of the tyre insensitive to the presence of water, and the other, called wet sensor (20), by its arrangement and/or its nature, measures the temperature T2 of the tyre sensitive to the presence of water, said device also comprising a means for comparing the two temperatures recorded by the sensors, and a warning means for alerting the driver in case of detection.

2. Detection device according to Claim 1, **characterized in that** the temperature T1 is measured on the side wall of the tyre by an infrared sensor (22) arranged at a distance from said side wall (23).

3. Detection device according to the preceding claim, **characterized in that** the sensor (22) is situated under the spring plate (24) of the shock absorber.

4. Detection device according to Claim 1, **characterized in that** the temperature T1 is measured in a sculpture (30) of the tread (21) of the tyre (27) by an infrared sensor (25), in line with the tread (21) of the tyre (27).

5. Detection device according to any one of the preceding claims, **characterized in that** the temperature T2 of the tread is measured by an infrared sensor (20) arranged facing said tread (21) of the tyre (27) and situated under the spring plate (24) of the shock absorber.

6. Detection device according to Claim 5, **characterized in that** the sensor (20) which measures the temperature T2 works within a wavelength range between 1 and 2 micrometres.

7. Method for detecting the presence of moisture, of water or of black ice on the tread (21) of a tyre (27) of a motor vehicle and for warning the driver using a device according to any one of the preceding claims, **characterized in that** the detection of water on the tread (21) of the tyre (27) is performed when the temperature difference between T1 and T2 is above a threshold S=5°C.

8. Detection method according to Claim 6, **characterized in that** the detection of ice on the tread (21) of the tyre (27) is performed when the measured temperatures T1 and T2 are close to zero or below zero.

9. Detection method according to one of Claims 6 and 7, **characterized in that** the moisture or ice presence detection information is returned to the dashboard of the driver.

10. Detection method according to any one of Claims 6 to 8, **characterized in that** the warning signal generated is sent to the active safety systems present on the vehicle such as the antilock braking system of the wheels, the automatic level control system, the power steering system, or the speed regulator, and is sent for as long as the detection of the presence of water takes place.

11. Detection method according to any one of Claims 6 to 9, **characterized in that** the steps of the method are performed continuously.
